# EUROPÄISCHE PATENTSCHRIFT

(11) **EP 0 839 821 B1**
(45) Veröffentlichungstag und Bekanntmachung des Hinweises auf die Patenterteilung: **20.11.2002**
(21) Anmeldenummer: 97810786.0
(22) Anmeldetag: 22.10.1997
(51) Int. Cl.: C07F 15/00

(54) **Verfahren zur Herstellung von Katalysatoren**
Process for preparing catalysts
Procédé de préparation de catalyseurs

(30) Priorität: 01.11.1996 CH 270796
(43) Veröffentlichungstag der Anmeldung: 06.05.1998
(73) Patentinhaber: Ciba Specialty Chemicals Holding Inc., 4057 Basel (CH)
(72) Erfinder: Van Der Schaaf, Paul Adriaan, 1700 Fribourg (CH); Kolly, Roman, 1719 Zumholz (CH); Hafner, Andreas, 3177 Laupen (CH); Mühlebach, Andreas, 1782 Belfaux (CH)

(56) Entgegenhaltungen:
- GRUENWALD, CLAUS ET AL: "Five-Coordinate 16-Electron Carbene- and Vinylideneruthenium(II) Complexes Prepared from [RuCl2(C8H12)]n or from the New Dihydridoruthenium(IV) Compound [RuH2Cl2(PiPr3)2]" ORGANOMETALLICS (1996), 15(8), 1960-2 CODEN: ORGND7;ISSN: 0276-7333, XP002107199

## Beschreibung

Die vorliegende Erfindung betrifft ein Verfahren zur Herstellung von Ruthenium carben-Katalysatoren.

Für die thermische Metathesepolymerisation von gespannten Cycloolefinen, welche in letzter Zeit grosse Bedeutung erlangt hat, werden Katalysatoren benötigt, die hauptsächlich Verbindungen von Übergangsmetallen sind. Während in der Regel zunächst Systeme aus Katalysator und Cokatalysator eingesetzt wurden (siehe zum Beispiel US 4,060,468 und WO 93/13171), sind auch Einkomponenten-Katalysatoren [Thoi, H.H., Ivin, K.J., Rooney, J.J., J. Mol. Catal. 15:245-270 (1982)] bekannt. Als für die Anwendung besonders interessante Verbindungen stellen sich in neuerer Zeit sogenannte "Metallcarbene" heraus, Ruthenium- und Osmium-Verbindungen mit einer an die Metallatome gebundenen Gruppe =CR*R** [WO 93/20111; Kanaoka, S., Grubbs, R.H., Macromolecules 28:4707-4713 (1995); Fraser, C., Hillmyer, M., Gutierrez, E., Grubbs, R.H., Polym. Prepr. 36:237-238 (1995); Schwab, P., France, M.B., Ziller, J.W., Grubbs, R.H., Angew. Chem. 107:2179-2181 (1995)].

Dieser Typ von Verbindungen eignet sich auch zur Katalyse des Ringschlusses bei Dienen (WO 96/04289).

Schwab et al. [Schwab, P., Grubbs, R.H., Ziller, J.W., J. Am. Chem. Soc. 118:100-110 (1996); Schwab, P., France, M.B., Ziller, J.W., Grubbs, R.H., Angew. Chem. Int. Ed. Engl. 34:2039-2041 (1995)] beschreiben die Synthese von Ru-Carbenen unter Verwendung von Diazoalkanen. In der WO 96/04289 wird die Synthese von Vinyl-Ru-Carbenen unter Verwendung von Cyclopropenen offenbart. Sowohl die Diazoalkane als auch die Cyclopropene sind thermisch instabil und nicht kommerziell erhältlich. Sie müssen deshalb kurz vor der Synthese erst in einem aufwendigen Verfahren hergestellt werden. Darüberhinaus sind Diazoalkane in der Regel toxisch und aufgrund ihrer Explosivität schlecht handhabbar.

Von Grünwald et al. [Grünwald, C., Gevert, O., Wolf, J., Gonzàlez-Herrero, P., Werner, H., Organometallics 15:1960-1962 (1996)] wird die Herstellung von Ru-Carben-Katalysatoren unter Verwendung von Alkinen, einem 100 % Überschuss an Phosphinen und H₂-Druck beschrieben.

Es wurde nun überraschend gefunden, dass Ruthenium- carbene ausgezeichnet unter Verwendung von leicht zugänglichen Ru- Salzen und eines Alkins und gegebenenfalls eines Alkens synthetisiert werden können. Beim erfindungsgemässen Verfahren ist die Verwendung von H₂ überflüssig. Das Verfahren kann bei Normaldruck und in Anwesenheit von Wasser durchgeführt werden. Ausserdem werden keine thermisch instabilen Cyclopropen- oder Diazoalkan-Verbindungen verwendet. Es kommen nur kommerziell erhältliche Reagentien mit niedrigem Preis zum Einsatz. Im Vergleich mit der von Grünwald et al. [Grünwald, C., Gevert, O., Wolf, J., Gonzàlez-Herrero, P., Werner, H., Organometallics 15:1969-1962 (1996)] beschriebenen Methode verläuft die Umsetzung schneller, es wird weniger Phosphin/Ru gebraucht und die Ausbeute ist insgesamt höher.

Die durch das erfindungsgemässe Verfahren hergestellten Verbindungen eignen sich ausserordentlich gut als Katalysatoren bei der Polymerisation von cyclischen Olefinen und beim Ringschluss von Dienen.

Ein erster Gegenstand der Erfindung ist ein Verfahren zur Herstellung einer Verbindung der Formel: 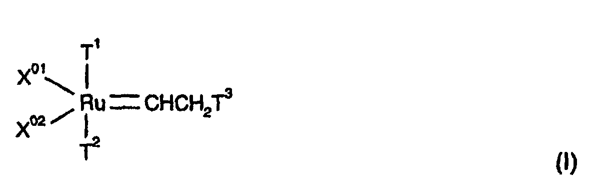 worin
X⁰¹ und X⁰² unabhängig voneinander Halogen bedeuten;
T¹ und T² unabhängig voneinander ein tertiäres Phosphin oder T¹ und T² zusammen ein ditertiäres Diphosphin oder sind; und
T³ H, C₁-C₂₀-Alkyl; C₃-C₈-Cycloalkyl, C₃-C₇-Heterocycloalkyl mit ein oder zwei Heteroatomen ausgewählt aus der Gruppe Sauerstoff-, Schwefel- und Stickstoffatom, C₆-C₁₄-Aryl, oder C₄-C₁₅-Heteroaryl mit ein bis drei Heteroatomen ausgewählt aus der Gruppe Sauerstoff-, Schwefel- und Stickstoffatom darstellt, wobei Alkyl, Cycloalkyl, Heterocycloalkyl, Aryl und Heteroaryl unsubstituiert oder mit C₁-C₄-Alkyl, C₁-C₄-Halogenalkyl, C₁-C₄-Alkoxy, C₆-C₁₀-Aryl, C₆-C₁₀-Aryloxy, -NO₂ oder Halogen substituiert sind;
indem man zuerst ein Metallsalz der Formel: 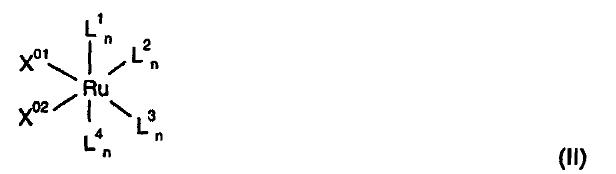 worin,
X⁰¹ und X⁰² die oben angegebenen Bedeutungen haben,
L¹, L², L³ und L⁴ unabhängig voneinander einen Neutralliganden und
n 0 oder 1 bedeuten;
in Anwesenheit einer Base und eines sekundären oder tertiären Alkohols mit einem tertiären Phosphin oder einem ditertiären Diphosphin odor umsetzt und anschliessend in Anwesenheit einer Säure mit einem Alkin der Formel:

HC≡C-T³ (III)

worin T³ die oben angegebenen Bedeutungen hat, umsetzt.

Halogen bedeutet erfindungsgemäss F, Cl, Br oder I. X⁰¹ und X⁰² in den Formeln I bedeuten bevorzugt F, Cl oder Br, bevorzugter Cl oder Br, und besonders bevorzugt je Cl.

Die tertiären Phosphine und ditertiären Diphosphine enthalten bevorzugt 3 bis 40, bevorzugter 3 bis 30 und besonders bevorzugt 3 bis 24 C-Atome.

Die tertiären Phosphine und die ditertiären Diphosphine entsprechen bevorzugt der Formel IV oder IVa

PR¹R²R³ (IV),

R¹R²P-Z-PR¹R² (IVa),

worin R¹, R² und R³ unabhängig voneinander C₁-C₂₀-Alkyl, C₄-C₁₂-Cycloalkyl, C₂C₁₁-Heterocycloalkyl, C₆-C₁₈-Aryl, C₂-C₁₅-Heteroaryl oder C₇-C₁₆-Aralkyl darstellen, wobei Alkyl, Cycloalkyl, Heterocycloalkyl, Aryl, Heteroaryl und Aralkyl unsubstituiert oder mit einem Substituenten ausgewählt aus der Gruppe bestehend aus C₁-C₆-Alkyl, C₁-C₆-Alkoxy, C₁-C₆-Halogenalkyl, C₆-C₁₆-Aryl, -NO₂, SO₃⁻, Ammonium oder Halogen substituiert sind; die Reste R¹ und R² gemeinsam unsubstituiertes oder mit C₁-C₆-Alkyl, C₁-C₆-Halogenalkyl, -NO₂ oder C₁-C₆-Alkoxy substituiertes Tetra- oder Pentamethylen bedeuten, oder unsubstituiertes oder mit C₁-C₆-Alkyl, C₁-C₆-Halogenalkyl, -NO₂, oder C₁-C₆-Alkoxy substituiertes und mit 1 oder 2 1,2-Phenylen kondensiertem Tetra- oder Pentamethylen darstellen, und R³ die zuvor angegebene Bedeutung hat; und
Z lineares oder verzweigtes, unsubstituiertes oder mit C₁-C₄-Alkoxy substituiertes C₂-C₁₂-Alkylen; unsubstituiertes oder mit C₁-C₄-Alkyl oder C₁-C₄-Alkoxy substituiertes 1,2-oder 1,3-Cycloalkylen mit 4 bis 8 C-Atomen; unsubstituiertes oder mit C₁-C₄-Alkyl oder C₁-C₄-Alkoxy substituiertes 1,2 oder 1,3-Heterocycloalkylen mit 5 oder 6 Ringgliedern und einem Heteroatom aus der Gruppe O- und N-Atom, unsubstituiertes oder mit C₁-C₄-Alkyl oder C₁-C₄-Alkoxy substituiertes 1,2-Phenylen; 1-Methylen-phen-2-yl; 1,2-Dimethylenbenzol oder unsubstituiertes oder mit C₁-C₄-Alkyl oder C₁-C₄-Alkoxy substituiertes 2,2'-Biphenylen bedeutet.

Bei den Neutralliganden in der Bedeutung von L₁, L₂, L₃ und L₄ handelt es sich bevorzugt um C₂-C₁₂-Alken, C₃-C₁₂-Cycloalken, C₆-C₁₄-Aren, C₄-C₁₂-Heteroaren, einen Ether, ein Phosphin, ein Phosphit, ein Nitril, ein Isonitril, ein Dialkylsulfoxid, H₂O oder ein Amin.

Beispiele für Alkyl sind Methyl, Ethyl und die Isomeren von Propyl, Butyl, Pentyl, Hexyl, Heptyl, Octyl, Nonyl, Decyl, Undecyl und Dodecyl. Ein Beispiel für mit einem Aryl substituiertes Alkyl ist Benzyl. Beispiele für Alkoxy sind Methoxy, Ethoxy und die Isomeren von Propoxy und Butoxy. Beispiele für Alkylen sind Methylen, Ethylen und die Isomeren von Propylen, Butylen, Pentylen, Hexylen, Heptylen, Octylen, Nonylen, Decylen, Undecylen und Dodecylen.

Beispiele für Alken sind Ethen, Propen, Buten, Butadien, Penten und die Isomeren von Pentadien, Hexadien, Heptadien, Octadien, Nonadien, Decadien und Hexatrien und die Isomeren von Heptatrien, Octatrien, Nonatrien und Decatrien.

Einige Beispiele für Cycloalkyl sind Cyclobutyl, Cycloheptyl, Cyclooctyl und besonders Cyclopentyl und Cyclohexyl. Beispiele für substituiertes Cycloalkyl sind Methyl-, Dimethyl-, Trimethyl-, Methoxy-, Dimethoxy-, Trimethoxy-, Trifluormethyl-, Bistrifluormethyl und Tristrifluormethylcyclopentyl und -cyclohexyl. Beispiele für Cycloalkylen sind 1,2- und 1,3-Cyclopentylen und 1,2- oder 1,3-Cyclohexylen.

Beispiele für Cycloalken sind Cyclopenten, Cyclohexen, Cyclohepten, Cycloocten, Cyclododecen, Cyclohexadien, Cycloheptadien und die Isomeren von Cyclooctadien und Cyclooctatetraen und Bicyclo[2.2.1]hepta-2,5-dien.

Einige Beispiele für Heterocycloalkyl sind Tetrahydrofuranyl, Pyrrolidinyl, Piperazinyl und Tetrahydrothiophenyl. Beispiele für Heterocycloalkylen sind 1,2- und 1,3-Pyrrolidin, 1,2- und 1,3-Piperidin sowie 1,2- und 1,3-Tetrahydrofuran.

Beispiele für Aryl sind Phenyl und Naphthyl. Beispiele für Aryloxy sind Phenyloxy und Naphthyloxy. Beispiele für substituiertes Aryl sind Methyl-, Dimethyl-, Trimethyl-, Methoxy-, Dimethoxy-, Trimethoxy-, Trifluormethyl-, Bistrifluormethyl und Tristrifluormethylphenyl. Ein Beispiel für Aralkyl ist Benzyl. Beispiele für substituiertes Aralkyl sind Methyl-, Dimethyl-, Trimethyl-, Methoxy-, Dimethoxy-, Trimethoxy-, Trifluormethyl-, Bistrifluormethyl und Tristrifluormethylbenzyl. Einige Beispiele für Heteroaryl sind Furanyl, Thiophenyl, Pyrrolyl, Pyridinyl und Pyrimidinyl.

Bei den Arenen und Heteroarenen handelt es sich beispielsweise um Benzol, Cumen, Biphenyl, Naphthalin, Anthracen, Acenaphthen, Fluoren, Phenanthren, Pyren, Chrysen, Fluoranthren, Furan, Thiophen, Pyrrol, Pyridin, γ-Pyran, γ-Thiopyran, Pyrimidin, Pyrazin, Indol, Cumaron, Thionaphthen, Carbazol, Dibenzofuran, Dibenzothiophen, Pyrazol, Imidazol, Benzimidazol, Oxazol, Thiazol, Isoxazol, Isothiazol, Chinolin, Isochinolin, Acridin, Chromen, Phenazin, Phenoxazin, Phenothiazin, Triazine, Thianthren oder Purin.

Bei den Nitrilen und Isonitrilen handelt es sich im Rahmen der vorliegenden Erfindung um Verbindungen der Formel R⁹-CN oder R⁹-NC, worin R⁹ C₁-C₁₂-Alkyl; C₃-C₈-Cycloalkyl, C₃-C₇-Heterocycloalkyl mit ein oder zwei Heteroatomen ausgewählt aus der Gruppe Sauerstoff-, Schwefel- und Stickstoffatom, C₆-C₁₄-Aryl, oder C₄-C₁₅-Heteroaryl mit ein bis drei Heteroatomen ausgewählt aus der Gruppe Sauerstoff-, Schwefel- und Stickstoffatom darstellt, wobei Alkyl, Cycloalkyl, Heterocycloalkyl, Aryl und Heteroaryl unsubstituiert oder mit C₁-C₄-Alkyl, C₁-C₄-Halogenalkyl, C₁-C₄-Alkoxy, C₆-C₁₀-Aryl, C₆-C₁₀-Aryloxy, -NO₂ oder Halogen substituiert sind.

Beispiele für Dialkylsulfoxid sind Dimethylsulfoxid, Diethylsulfoxid, Tetra- und Pentamethylensulfoxid.

Beispiele für Ether sind Dibutylether, Tetrahydrofuran, Dioxan, Ethylenglykolmonomethyloder -dimethylether, Ethylenglykolmonoethyl- oder -diethylether, Diethylenglykoldiethylether und Triethylenglykoldimethylether.

Im Rahmen der vorliegenden Erfindung entsprechen Amine der Formel R¹⁰R¹¹R¹²N und Ammonium der Formel R¹⁰R¹¹R¹²N⁺, worin R¹⁰, R¹¹ und R¹² unabhängig voneinander Wasserstoff, C₁-C₁₈-Alkyl, unsubstituiertes oder mit C₁-C₄-Alkyl oder C₁-C₄-Alkoxy substituiertes C₅- oder C₆-Cycloalkyl, oder unsubstituiertes oder mit C₁-C₄-Alkyl oder C₁-C₄-Alkoxy substituiertes C₆-C₁₈-Aryl oder C₇-C₁₂-Aralkyl darstellen; oder R¹⁰ und R¹¹ gemeinsam Tetramethylen, Pentamethylen, 3-Oxa-1,5-pentylen oder -[CH₂]₂NH[CH₂]₂- oder -[CH₂]₂N-(C₁-C₄-Alkyl)-[CH₂]₂- bedeuten, und R¹² unabhängig die Bedeutung von R¹⁰ hat. Das Alkyl enthält bevorzugt 1 bis 12 und besonders bevorzugt 1 bis 6 C-Atome. Das Aryl enthält bevorzugt 6 bis 12 C-Atome und das Aralkyl enthält bevorzugt 7 bis 9 C-Atome. Beispiele für Amine sind Methyl-, Dimethyl-, Trimethyl-, Ethyl-, Diethyl-, Triethyl-, Methyl-ethyl-, Dimethylethyl, n-Propyl-, Di-n-propyl-, Tri-n-butyl-, Cyclohexyl-, Phenyl- und Benzylamin, sowie Pyrrolidin, N-Methylpyrrolidin, Piperidin, Piperazin, Morpholin und N-Methylmorpholin.

Bei den Resten R¹, R² und R³ handelt es sich bevorzugt um gleiche Reste. Ferner sind Reste R¹, R² und R³ ganz besonders bevorzugt, die sterisch anspruchsvoll sind, wie zum Beispiel cyclische oder verzweigte, besonders α,α-diverzweigte und ganz besonders α-verzweigte Alkylgruppen.

Sofern R¹, R² und R³ substituiert sind, handelt es sich bei den Substituenten bevorzugt um C₁-C₄-Alkyl, C₁-C₄-Halogenalkyl, C₁-C₄-Alkoxy, SO₃⁻ oder Ammonium. Halogen bedeutet bevorzugt Cl und besonders bevorzugt F. Beispiele für bevorzugte Substituenten sind Methyl, Methoxy, Ethyl, Ethoxy und Trifluormethyl. R¹, R² und R³ können zum Beispiel mit 1 bis 3 Substituenten substituiert sein.

R¹, R² und R³ können als Alkyl linear oder verzweigt sein und bevorzugt 1 bis 12, bevorzugter 1 bis 8, und besonders bevorzugt 1 bis 6 C-Atome enthalten. Bevorzugte Beispiele sind Methyl, Ethyl, n- und i-Propyl, n-, i-, s- und t-Butyl, 1-, 2- oder 3-Pentyl und 1-, 2-, 3-oder 4-Hexyl. Besonders bevorzugt sind sterisch anspruchsvolle verzweigte Alkylgruppen.

Bedeuten R¹, R² und R³ Cycloalkyl, so handelt es sich bevorzugt um C₅-C₈-Cycloalkyl und besonders bevorzugt um C₅- oder C₆-Cycloalkyl.

Bedeuten R¹, R² und R³ Aryl, so handelt es sich bevorzugt um C₆-C₁₂-Aryl und besonders bevorzugt um Phenyl oder Naphthyl.

Bedeuten R¹, R² und R³ Aralkyl, so handelt es sich bevorzugt um C₇-C₁₃-Aralkyl, wobei die Alkylengruppe im Aralkyl bevorzugt Methylen darstellt. Besonders bevorzugt stellt das Aralkyl Benzyl dar.

Beispiele für an das P-Atom gebundenes, gegebenenfalls substituiertes beziehungsweise kondensiertes Tetra- und Pentamethylen sind

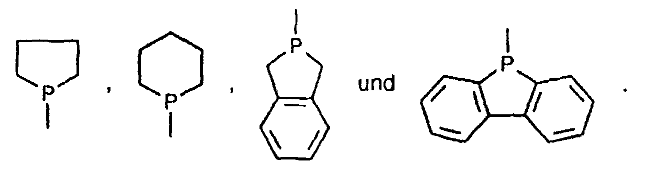

Andere geeignete Phosphine sind mit einer =PR⁴-Gruppe überbrückte Cycloaliphate mit 6 bis 8 Ringkohlenstoffatomen, zum Beispiel 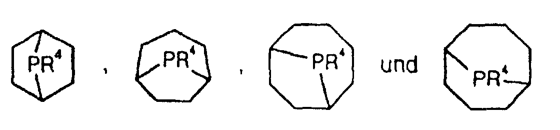 worin R⁴ C₁-C₆-Alkyl, Cyclohexyl, Benzyl, unsubstituiertes oder mit 1 oder 2 C₁-C₄-Alkyl substituiertes Phenyl bedeutet.

Bei Z als linearem oder verzweigtem Alkylen handelt es sich bevorzugt um 1,2-Alkylen oder 1,3-Alkylen mit vorzugsweise 2 bis 6 C-Atomen, zum Beispiel um Ethylen, 1,2-Propylen oder 1,2-Butylen.

Bevorzugt sind tertiäre Phosphine der Formel IV, worin R¹, R² und R³ unabhängig voneinander C₁-C₂₀-Alkyl, C₄-C₁₂-Cycloalkyl oder C₆-C₁₆-Aryl darstellen, wobei Alkyl, Cycloalkyl und Aryl unsubstituiert oder mit einem Substituenten ausgewählt aus der Gruppe bestehend aus C₁-C₆-Alkyl, C₁-C₆-Alkoxy, C₁-C₆-Halogenalkyl, C₆-C₁₆-Aryl, -NO₂, SO₃⁻, Ammonium oder Halogen substituiert sind. Besonders bevorzugte Beispiele für tertiäre Phosphine der Formel IV sind (C₆H₅)₂(i-C₃H₇)P, (C₆H₅)(i-C₃H₇)₂P, (C₆H₅)₂(C₆H₁₁)P, (C₆H₅)₃P, (C₆H₅CH₂)₃P, (C₅H₉)₃P, (2,3-Di-t-C₄H₉-C₆H₃)₃P, (2,6-Di-t-C₄H₉-C₆H₃)₃P, (3-CH₃-6-t-C₄H₉-C₆H₃)₃P, (C₆H₁₁)₃P, (2-CH₃-6-t-C₄H₉-C₆H₃)₃P, (4-t-C₄H₉-C₆H₄)₃P, (3-t-C₄H₉-C₆H₄)₃P, (2-t-C₄H₉-C₆H₄)₃P, (4-i-C₄H₉-C₆H₄)₃P, (CH₃)₃P, (C₂H₅)₃P, (n-C₃H₇)₃P, (i-C₃H₇)₃P, (n-C₄H₉)₃P, (3-i-C₄H₉-C₆H₄)₃P, (2-i-C₄H₉-C₆H₄)₃P, (4-n-C₄H₉-C₆H₄)₃P, (3-n-C₄H₉-C₆H₄)₃P, (s-C₄H₉)₃P, (2-CH₃-C₆H₄)₃P, (3-CH₃-C₆H₄)₃P, (4-CH₃-C₆H₄)₃P, (2,4-Di-CH₃-C₆H₃)₃P, (2,6-Di-CH₃-C₆H₃)₃P, (2-C₂H₅-C₆H₄)₃P, (3-C₂H₅-C₆H₄)₃P, (4-C₂H₅-C₆H₄)₃P, (2-n-C₃H₇-C₆H₄)₃P, (3-n-C₃H₇-C₆H₄)₃P, (4-n-C₃H₇-C₆H₄)₃P, (2-i-C₃H₇-C₆H₄)₃P, (3-i-C₃H₇-C₆H₄)₃P, (4-i-C₃H₇-C₆H₄)₃P, (C₆H₅)(C₆H₁₁)₂P, (2-n-C₄H₉-C₆H₄)₃P, (C₆H₅)(s-C₄H₉)₂P, (C₆H₁₁)[C(C₂H₄)₂(N(CH₃)₃Cl)]P, (C₆H₁₁)₂[CH₂CH₂N(CH₃)₃Cl]P, (C₆H₁₁)₂[CH₂CH₂SO₃Na]P und (2,4-Di-t-C₄H₉-C₆H₃)₃P.

T³ kann als Alkyl bevorzugt 1 bis 12 und besonders bevorzugt 1 bis 8 C-Atome enthalten. Besonders bevorzugt ist T³ lineares C₁-C₈-Alkyl.

T³ kann als Cycloalkyl bevorzugt 5 bis 8 C-Atome enthalten. Besonders bevorzugt sind Cyclopentyl und Cyclohexyl.

T³ kann als Heterocycloalkyl bevorzugt 4 oder 5 C-Atome und bevorzugt ein Heteroatom ausgewählt aus der Gruppe Sauerstoff-, Schwefel- und Stickstoffatom enthalten.

T³ kann als Aryl bevorzugt 6 bis 10 C-Atome enthalten. Bevorzugte Beispiele sind Naphthyl und besonders Phenyl und substituiertes Phenyl.

T³ kann als Heteroaryl bevorzugt 4 oder 5 C-Atome und ein oder zwei Heteroatome ausgewählt aus der Gruppe Sauerstoff-, Schwefel- und Stickstoffatom enthalten.

Bevorzugte Substituenten für T³ sind Methyl, Ethyl, Methoxy, Ethoxy, Trichlormethyl, Trifluormethyl, Phenyl, Phenyloxy, F, Cl, i-Propyl, t-Butyl und OH.

In einer bevorzugten Ausführungsform stellt T³ H, C₁-C₉-Alkyl, Cyclopentyl, Cyclohexyl, Phenyl oder Naphthyl dar, die unsubstituiert oder mit C₁-C₄-Alkyl, C₁-C₄-Alkoxy, C₁-C₄-Halogenalkyl, Phenyl, F oder Cl substituiert sind, beispielsweise stellt T³ bevorzugt Benzyl dar.

Eine bevorzugte Untergruppe der Verbindungen der Formeln I sind solche der Formeln Ib, 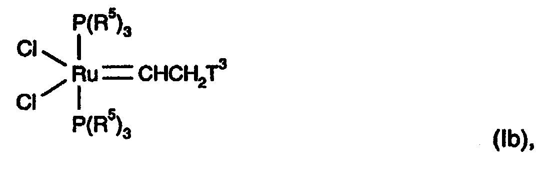 worin R⁵ für α-verzweigtes C₃-C₈-Alkyl, unsubstituiertes oder mit C₁-C₄-Alkyl, C₁-C₄-Halogenalkyl, C₁-C₄-Alkoxy, Halogen oder -NO₂ substituiertes C₅-C₈-Cycloalkyl, oder unsubstituiertes oder mit C₁-C₄-Alkyl, C₁-C₄-Halogenalkyl, C₁-C₄-Alkoxy, Halogen oder -NO₂ substituiertes C₆-C₁₀-Aryl steht, und
T³ H, C₁-C₆-Alkyl, unsubstituiertes oder mit C₁-C₄-Alkyl, C₁-C₄-Halogenalkyl, C₁-C₄-Alkoxy, Halogen oder -NO₂ substituiertes C₅-C₈-Cycloalkyl, oder unsubstituiertes oder mit C₁-C₄-Alkyl, C₁-C₄-Halogenalkyl, C₁-C₄-Alkoxy, Halogen oder -NO₂ substituiertes C₆-C₁₀-Aryl bedeutet.

Einige spezifische und bevorzugte Beispiele für Verbindungen der Formel I sind I um Cl₂[P(C₅H₉)₃]₂Ru=CH-CH₃, Cl₂[P(C₆H₁₁)₃]₂Ru=CHCH₃, Cl₂[P(C₅H₉)₃]₂Ru=CH-n-C₄H₉, Cl₂[P(C₆H₁₁)₃]₂Ru =CH-n-C₄H₉, Br₂[P(C₅H₉)₃]₂Me=CH-CH₂C₆H₅, BrCl[P(C₆H₁₁)₃]₂Ru =CH-CH₂C₆H₅, oder BrCl[P(i-C₃H₇)₃]₂Ru =CH-CH₂C₆H₅.

L₁, L₂, L₃ und L₄ sind bevorzugt ausgewählt aus der Gruppe bestehend aus H₂O, C₂-C₁₂-Alken, C₃-C₁₂-Cycloalken, Dimethylsulfoxid, tertiäres Phosphin und tertiäres Amin. Besonders bevorzugt sind H₂O und Cycloalkene wie Norbornadien und Cyclooctadien.

Im Rahmen der vorliegenden Erfindung ist jede Base (Protonenakzeptor) und jede Säure (Protonendonor) geeignet. Bevorzugte Basen sind solche, die eine stärkere Basizität als Wasser aufweisen. Beispiele sind tertiäre Amine, Metallhydroxide, Metallalkoholate und - phenolate. Bevorzugte Basen sind Triethylamin, 1,8-Diazabicyclo[5.4.0]undec-7-en, KOH, NaOH, KO-t-Butyl und NaO-Methyl, insbesondere Triethylamin und 1,8-Diazabicyclo-[5.4.0]undec-7-en.

Bevorzugte Säuren sind Halogenwasserstoffsäuren. Beispiele sind ausgewählt aus der Gruppe bestehend aus HF, HCI, HBr und HI, besonders bevorzugt sind HCI und HBr.

Bei den sekundären und tertiären Alkoholen handelt es sich vorteilhafterweise um Verbindungen der Formel HC(R⁶)(R⁷)OH oder R⁶C(R⁷)(R⁸)OH, worin R⁶, R⁷ und R⁸ unabhängig voneinander C₁-C₂₀-Alkyl, unsubstituiertes oder mit C₁-C₆-Alkyl, C₁-C₆-Halogenalkyl, -NO₂ oder C₁-C₆-Alkoxy substituiertes C₄-C₁₂-Cycloalkyl, oder unsubstituiertes oder mit C₁-C₆-Alkyl, C₁-C₆-Halogenalkyl, -NO₂ oder C₁C₆-Alkoxy substituiertes C₆-C₁₆-Aryl, oder unsubstituiertes oder mit C₁-C₆-Alkyl, C₁-C₆-Halogenalkyl, -NO₂ oder C₁-C₆-Alkoxy substituiertes C₇-C₁₆-Aralkyl darstellen; oder die Reste R⁶ und R⁷ gemeinsam unsubstituiertes oder mit C₁-C₆-Alkyl, C₁-C₆-Halogenalkyl, -NO₂ oder C₁-C₆-Alkoxy substituiertes Tetra- oder Pentamethylen bedeuten, oder unsubstituiertes oder mit C₁-C₆-Alkyl, C₁-C₆-Halogenalkyl, -NO₂, oder C₁-C₆-Alkoxy substituiertes und mit 1 oder 2 1,2-Phenylen kondensiertem Tetraoder Pentamethylen darstellen, und R⁸ die zuvor angegebene Bedeutung hat.

Bevorzugt sind R⁶, R⁷ und R⁸ unabhängig voneinander C₁-C₂₀-Alkyl, unsubstituiertes oder mit C₁-C₆-Alkyl, C₁-C₆-Halogenalkyl, -NO₂ oder C₁-C₆-Alkoxy substituiertes C₄-C₁₂-Cycloalkyl. Besonders bevorzugt sind R⁶, R⁷ und R⁸ unabhängig voneinander C₁-C₁₀ Alkyl oder C₄-C₁₂-Cycloalkyl. Insbesondere bevorzugt sind Methyl, Ethyl, Propyl, i-Propyl, Butyl, i-Butyl und s-Butyl.

Das erfindungsgemässe Verfahren wird vorteilhafterweise so durchgeführt, dass Metallsalz, Base und Phosphin oder Phosphit im sekundären oder tertiären Alkohol suspendiert werden. Durch Erwärmen auf eine Temperatur im Bereich von 0°C bis 150°C, bevorzugt 60°C bis 100°C, besonders bevorzugt 80°C bis 90°C, wobei sich die Wahl der Temperatur insbesondere nach dem Siedepunkt des eingesetzten Alkohols richtet, geht die Suspension in eine Lösung über.

Zu der Lösung werden Säure und Alkin hinzugefügt, wobei es unerheblich ist, in welcher Reihenfolge dies geschieht. Es hat sich als vorteilhaft herausgestellt, zuerst die Säure und erst dann das Alkin hinzuzufügen. Eine günstige Reaktionstemperatur liegt für diesen Schritt im Bereich von -150°C bis 150°C, bevorzugt -100°C bis 60°C und besonders bevorzugt von -80°C bis Raumtemperatur (RT).

Insbesondere wird das erfindungsgemässe Verfahren so durchgeführt, dass
(a) Metallsalz, Base und Phosphin oder Phosphit im sekundären oder tertiären Alkohol suspendiert werden,
(b) die Suspension auf eine Temperatur im Bereich des Siedepunkts des eingesetzten Alkohols erwärmt wird,
(c) Säure und Alkin zur resultierenden Lösung hinzugefügt werden und
(d) das Reaktionsgemisch bei einer Temperatur im Bereich von -150°C bis 150°C umgesetzt wird.

Die Umsetzung der Verbindungen der Formel I erfolgt vorteilhafterweise bei einer Temperatur im Bereich von 0°C bis 100°C, bevorzugt bei RT bis 50°C.

Alle Reaktionsschritte erfolgen üblicherweise bei Normaldruck, wobei es sich als insbesondere vorteilhaft für die Herstellung der Verbindungen der Formel I herausgestellt hat, in einer inerten Atmosphäre, vorzugsweise in einer Stickstoff- oder Argonatmosphäre zu arbeiten.

Das Masseverhältnis von Phosphin oder Phosphit, Base, Säure oder Alkin zum Metallsalz liegt in der Regel im Bereich von 2:1 bis 100:1, wobei das Verhältnis 2:1 bevorzugt ist,

Das Masseverhältnis von Alken zur Verbindung der Formel I liegt in der Regel im Bereich von 1:1 bis 100:1, bevorzugt von 1:1 bis 10:1, wobei das Verhältnis 5:1 insbesonders bevorzugt ist.

Die erhaltenen Verbindungen der Formel I werden durch bekannte Verfahren aufgearbeitet, wie sie beispielsweise in WO 96/04289, Schwab et al. [Schwab, P., Grubbs, R.H., Ziller, J.W., J. Am. Chem. Soc. 118:100-110 (1996)] und Grünwald et al. [Grünwald, C., Gevert, O., Wolf, J., Gonzàlez-Herrero, P., Werner, H., Organometallics 15:1960-1962 (1996)] beschrieben sind.

Die cyclischen Olefine, die mit Hilfe der erfindungsgemäss hergestellten Katalysatoren polymerisiert werden können, sind bekannt und beispielsweise in WO 96/24629 (FM/6-20336/A) beschrieben. Es handelt sich vorzugsweise um monocyclische oder polycyclische kondensierte und/oder überbrückte und/oder verbrückte Ringsysteme, zum Beispiel mit zwei bis vier Ringen, die unsubstituiert oder substituiert sind und Heteroatome wie zum Beispiel O-, S-, N- oder Si-Atom in einem oder mehreren Ringen und/oder kondensierte aromatische oder heteroaromatische Ringe wie zum Beispiel o-Phenylen, o-Naphthylen, o-Pyridinylen oder o-Pyrimidinylen enthalten können. Vorzugsweise handelt es sich bei den Cycloolefinen um Norbomen oder Norbornenderivate, Norbomadien, Dicyclopentadien, Cyclopenten, Cyclohepten, Cycloocten, Cyclooctadien oder Cyclododecen.

Die Diene, die mit Hilfe der erfindungsgemäss hergestellten Katalysatoren ringgeschlossen werden können, sind beispielsweise beschrieben in Miller et al. [Miller, S.J., Blackwell, H.E., Grubbs, R.H., J. Am. Chem. Soc. 118:9606-9614 (1996)] oder in Grubbs et al. [Grubbs, R.H., Miller, S.J., Fu, G.C., Acc. Chem. Res. 28:446-452 (1995)].

Die nachfolgenden Beispiele erläutern die Erfindung näher.

### Beispiel 1: Herstellung von Cl₂[P(i-C₃H₇)₃]₂Ru=CH-CH₂-C₆H₅

(a) Eine braune Suspension von RuCl₂(cis,cis-1,5-Cyclooctadien) (220 mg; 0.78 mmol), 0.22 ml (1.56 mmol) Triethylamin und 0.3 ml Tri-isopropylphosphin in 25 ml Isopropanol wird 15 h bei 80°C gerührt. Die resultierende klare rote Lösung wird auf -78°C abgekühlt. Nach der Zugabe von 0.17 ml Phenylacetylen (1.56 mmol) wird die Lösung innerhalb von 10 min auf -50°C erwärmt. Die resultierende dunkelbraune Lösung wird auf -78°C abgekühlt. Nach der Zugabe von 3 ml 1 M HCI Lösung in Diethylether (3 mmol) lässt man die Temperatur innerhalb von 15 min auf 0°C ansteigen. Die resultierende braunrote Suspension wird im Vakuum bis auf einen braunroten, halbfesten Rückstand konzentriert. Der Rückstand wird mit 8 ml Methanol verrührt, zentrifugiert und dekantiert. Der resultierende feine Rückstand wird mit 4 ml Methanol verrührt, zentrifugiert und dekantiert. Durch Trocknung im Vakuum werden 95 mg der Zielverbindung als violettes Pulver erhalten (Reinheit: 50 %).
(b) Eine braune Suspension von RuCl₂(cis,cis-1,5-Cyclooctadien) (110 mg; 0.39 mmol), 0.11 ml (0.78 mmol) Triethylamin und 0.15 ml Tri-isopropylphosphin in 13 ml isopropanol wird 15 h bei 80°C gerührt. Die resultierende klare rote Lösung wird auf -78°C abgekühlt. Nach der Zugabe von 0.8 ml 1 M HCI Lösung in Diethylether wird 5 min gerührt. Nach der Zugabe von 0.07 ml 1-Phenylacetylen (0.4 mmol) zur resultierenden gelben Suspension lässt man die Temperatur während 30 min auf Raumtemperatur ansteigen. Die resultierende braune Lösung wird am Hochvakuum eingeengt und gibt einen braunroten Rückstand. Das NMR zeigt das erwartete Produkt fast rein mit nur Spuren von Nebenprodukten.

### Beispiel 2: Herstellung von Cl₂[P(i-C₃H₇)₃]₂Ru=CH-C₅H₁₁

440 mg Cl₂Ru(Cyclooctadien), 600 µl Tri-isopropylphosphin, 440 µl Triethylamin und 50 ml Isopropanol werden unter N₂ vorgelegt. Die braune Suspension wird auf 80 °C erwärmt. Nach 15 h bei 80 °C ist die Suspension in eine klare rote Lösung übergegangen. Von dieser Lösung werden 25 ml (0,785 mMol) entnommen und auf -78 °C gekühlt. 1,6 ml 1 M HCI-Lösung (2 Äquivalente) in Diethylether werden zugegeben und es wird 3 min bei -78 °C gerührt. Dann werden 180 µl 1-Hexin zugegeben und die Lösung wird auf -10 °C erwärmt, wodurch eine braun-violette Suspension entsteht, die im Vakuum auf das halbe Volumen konzentriert wird. Nach erneutem Abkühlen auf -25 °C, Zentrifugation und Trocknung des Rückstandes wird die Titelverbindung als dunkelviolettes Pulver erhalten (310 mg/69 %).

### Beispiel 3: Herstellung von Cl₂[P(i-C₃H₇)₃]₂Ru=CH-C₇H₁₅

(a) Eine braune Suspension von RuCl₂(cis,cis-1,5-Cyclooctadien) (110 mg; 0.39 mmol), 0.11 ml (0.78 mmol) Triethylamin und 0.15 ml Tri-isopropylphosphin in 13 ml Isopropanol wird 15 h bei 80°C gerührt. Die resultierende klare rote Lösung wird auf -78°C abgekühlt. Nach der Zugabe von 0.8 ml 1 M HCl-Lösung in Diethylether wird 5 min gerührt. Nach der Zugabe von 0.06 ml 1-Oktin (0.8 mmol) zur resultierenden gelben Suspension lässt man die Temperatur während 15 min auf Raumtemperatur ansteigen. Die resultierende braune Lösung wird im Vakuum eingeengt und gibt einen braunroten Rückstand. Der Rückstand wird mit 2 x 4 ml Methanol verrührt, zentrifugiert und dekantiert. Das Produkt, ein violettes Pulver, wird im Vakuum getrocknet (Ausbeute: 25 mg; 10 %).
(b) Eine braune Suspension von RuCl₂(cis,cis-1,5-Cyclooctadien) (440 mg; 1.56 mmol), 0.44 ml (3.15 mmol) Triethylamin und 0.6 ml Tri-isopropylphosphin in 50 ml Isopropanol wird 6 h bei 85°C gerührt. Die resultierende klare rote Lösung wird auf -78°C abgekühlt. Nach der Zugabe von 3.2 ml 1 M HCl-Lösung in Diethylether wird 5 min gerührt. Nach der Zugabe von 0.23 ml 1-Oktin (1.6 mmol) zur resultierenden gelben Suspension lässt man die Temperatur auf -20°C ansteigen. Die resultierende braune Suspension wird 30 min bei -20 bis -30°C gerührt. Einengen bei -5°C am Hochvakuum gibt einen braunroten Rückstand. Der Rückstand wird mit 25 ml Hexan extrahiert und ergibt nach Einengen einen braunvioletten, halbfesten Rückstand. Der Rückstand wird mit 20 ml -70°C kaltem Methanol verrührt, zentrifugiert und dekantiert. Das feine, dunkelviolette Pulver wird im Vakuum getrocknet. Ausbeute ist 270 mg (28 %) reines Produkt.

### Beispiel 4: Herstellung von Cl₂[P(i-C₃H₇)₃]₂Ru=CH-CH₃

Eine braune Suspension von RuCl₂(cis,cis-1,5-Cyclooctadien) (110 mg; 0.39 mmol), 0.11 ml Triethylamin und 0.15 ml Tri-isopropylphosphin in 12.5 ml Isopropanol wird 3.5 h bei 85°C gerührt. Die resultierende klare rote Lösung wird auf -78°C abgekühlt. Nach der Zugabe von 0.8 ml 1 M HCI-Lösung in Diethylether wird 5 min gerührt. Die resultierende gelbe Suspension wird innerhalb von 30 min auf 10°C erwärmt. Durch Einleitung von Acetylen (2 Blasen/sec) erhält man eine braunrote Suspension, welche am Hochvakuum konzentriert wird. Der resultierende braunrote Rückstand wird mit 4 ml Methanol verrührt, zentrifugiert und dekantiert. Das feine, violette Pulver wird am Hochvakuum getrocknet. Ausbeute ist 105 mg (51 %) reines Produkt

### Beispiel 5: Herstellung von Cl₂[P(i-C₃H₇)₃]₂Ru=CH-CH₂C₆H₅

440 mg Cl₂Ru(Cyclooctadien), 600 µl Tri-isopropylphosphin, 440 µl Triethylamin und 50 ml Isopropanol werden unter N₂ vorgelegt. Die braune Suspension wird auf 85°C erwärmt. Nach 3,5 h bei 85°C ist die Suspension in eine rote Lösung übergegangen. Von dieser Lösung werden 25 ml (0,785 mMol) entnommen und unter N₂ auf -78 °C gekühlt. 1,58 ml 1M HCI-Lösung in Diethylether werden zugegeben und es wird 5 min gerührt, wodurch eine gelbe Suspension entsteht. Anschliessend wird während 30 min Acetylengas (2 Blasen/sec) eingeleitet. Es entsteht ein violetter Niederschlag. Nach Zugabe von 1,5 ml (15 Äquivalente) Allylbenzol wird die Suspension auf RT erwärmt. Nach 1 h Rühren bei RT wird das Reaktionsgemisch konzentriert und der Rückstand dreimal mit je 8 ml Methanol gewaschen. Nach Trocknung des Rückstandes im Vakuum wird die Zielverbindung als violettes Pulver erhalten (300 mg/64 %).

## Patentansprüche

1. Verfahren zur Herstellung einer Verbindung der Formel: 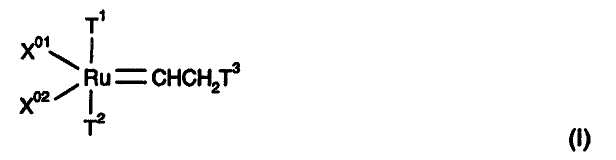 worin
X⁰¹ und X⁰² unabhängig voneinander Halogen bedeuten;
T¹ und T² unabhängig voneinander ein tertiäres Phosphin oder T¹ und T² zusammen ein ditertiäres Diphosphin sind; und
T³ H, C₁-C₂₀-Alkyl; C₃-C₈-Cycloalkyl, C₃-C₇-Heterocycloalkyl mit ein oder zwei Heteroatomen ausgewählt aus der Gruppe Sauerstoff-, Schwefel- und Stickstoffatom, C₆-C₁₄-Aryl, oder C₄-C₁₅-Heteroaryl mit ein bis drei Heteroatomen ausgewählt aus der Gruppe Sauerstoff-, Schwefel- und Stickstoffatom darstellt, wobei Alkyl, Cycloalkyl, Heterocycloalkyl, Aryl und Heteroaryl unsubstituiert oder mit C₁-C₄-Alkyl, C₁-C₄-Halogenalkyl, C₁-C₄-Alkoxy, C₆-C₁₀-Aryl, C₆-C₁₀-Aryloxy, -NO₂ oder Halogen substituiert sind;
indem man zuerst ein Metallsalz der Formel: 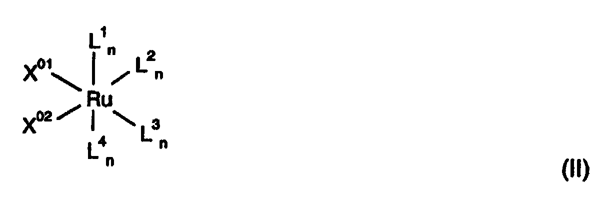 worin
X⁰¹ und X⁰² die oben angegebenen Bedeutungen haben,
L¹, L², L³ und L⁴ unabhängig voneinander einen Neutralliganden und
n 0 oder 1 bedeuten;
in Anwesenheit einer Base und eines sekundären oder tertiären Alkohols mit einem tertiären Phosphin oder einem ditertiären Diphosphin umsetzt und anschliessend in Anwesenheit einer Säure mit einem Alkin der Formel:
HC≡C-T³ (III)
worin T³ die oben angegebenen Bedeutungen hat, umsetzt.

2. Verfahren nach Anspruch 1, **dadurch gekennzeichnet, dass** X⁰¹ und X⁰² Cl bedeutet.

3. Verfahren gemäss Anspruch 1, **dadurch gekennzeichnet, dass** die tertiären Phosphine und die ditertiären Diphosphine den Formeln IV oder IVa, entsprechen
PR¹R²R³ (IV),
R¹R²P-Z-PR¹R² (IVa),
worin R¹, R² und R³ unabhängig voneinander C₁-C₂₀-Alkyl, C₄-C₁₂-Cycloalkyl, C₂-C₁₁-Heterocycloalkyl, C₆-C₁₆-Aryl, C₂-C₁₅-Heteroaryl oder C₇-C₁₆-Aralkyl darstellen, wobei Alkyl, Cycloalkyl, Heterocycloalkyl, Aryl, Heteroaryl und Aralkyl unsubstituiert oder mit einem Substituenten ausgewählt aus der Gruppe bestehend aus C₁-C₆-Alkyl, C₁-C₆-Alkoxyl C₁-C₆-Halogenalkyl, C₆-C₁₆-Aryl, -NO₂, SO₃⁻, Ammonium oder Halogen substituiert sind; die Reste R¹ und R² gemeinsam unsubstituiertes oder mit C₁-C₆-Alkyl, C₁-C₆-Halogenalkyl, -NO₂ oder C₁-C₆-Alkoxy substituiertes Tetra- oder Pentamethylen bedeuten, oder unsubstituiertes oder mit C₁-C₆-Alkyl, C₁-C₆-Halogenalkyl, -NO₂, oder C₁-C₆-Alkoxy substituiertes und mit 1 oder 2 1,2-Phenylen kondensiertem Tetra- oder Pentamethylen darstellen, und R³ die zuvor angegebene Bedeutung hat; und
Z lineares oder verzweigtes, unsubstituiertes oder mit C₁-C₄-Alkoxy substituiertes C₂-C₁₂-Alkylen; unsubstituiertes oder mit C₁-C₄-Alkyl oder C₁-C₄-Alkoxy substituiertes 1,2-oder 1,3-Cycloalkylen mit 4 bis 8 C-Atomen; unsubstituiertes oder mit C₁-C₄-Alkyl oder C₁-C₄-Alkoxy substituiertes 1,2 oder 1,3-Heterocycloalkylen mit 5 oder 6 Ringgliedern und einem Heteroatom aus der Gruppe O- und N-Atom, unsubstituiertes oder mit C₁-C₄-Alkyl oder C₁-C₄-Alkoxy substituiertes 1,2-Phenylen; 1-Methylen-phen-2-yl; 1,2-Dimethylenbenzol oder unsubstituiertes oder mit C₁-C₄-Alkyl oder C₁-C₄-Alkoxy substituiertes 2,2'-Biphenylen bedeutet.

4. Verfahren gemäss Anspruch 1, **dadurch gekennzeichnet, dass** T¹ und T² einem tertiären Phosphin der Formel IV entsprechen, worin R¹, R² und R³ unabhängig voneinander C₁-C₂₀-Alkyl, C₄-C₁₂-Cycloalkyl oder C₆-C₁₆-Aryl darstellen, wobei Alkyl, Cycloalkyl und Aryl unsubstituiert oder mit einem Substituenten ausgewählt aus der Gruppe bestehend aus C₁-C₆-Alkyl, C₁-C₆-Alkoxy, C₁-C₆-Halogenalkyl, C₆-C₁₆-Aryl, -NO₂, SO₃⁻, Ammonium oder Halogen substituiert sind.

5. Verfahren gemäss Anspruch 4, **dadurch gekennzeichnet, dass** T¹ und T² (C₆H₅)₂(i-C₃H₇)P, (C₆H₅)(i-C₃H₇)₂P, (C₆H₅)₂(C₆H₁₁)P, (C₆H₅)₃P, (C₆H₅CH₂)₃P, (C₅H₉)₃P, (2,3-Di-t-C₄H₉-C₆H₃)₃P, (2,6-Di-t-C₄H₉-C₆H₃)₃P, (3-CH₃-6-t-C₄H₉-C₆H₃)₃P, (C₆H₁₁)₃P, (2-CH₃-6-t-C₄H₉-C₆H₃)₃P, (4-t-C₄H₉-C₆H₄)₃P, (3-t-C₄H₉-C₆H₄)₃P, (2-t-C₄H₉-C₆H₄)₃P, (4-i-C₄H₉-C₆H₄)₃P, (CH₃)₃P, (C₂H₅)₃P, (n-C₃H₇)₃P, (i-C₃H₇)₃P, (n-C₄H₉)₃P, (3-i-C₄H₉-C₆H₄)₃P, (2-i-C₄H₉-C₆H₄)₃P, (4-n-C₄H₉-C₆H₄)₃P, (3-n-C₄H₉-C₆H₄)₃P, (s-C₄H₉)₃P, (2-CH₃-C₆H₄)₃P, (3-CH₃-C₆H₄)₃P, (4-CH₃-C₆H₄)₃P, (2,4-Di-CH₃-C₆H₃)₃P, (2,6-Di-CH₃-C₆H₃)₃P, (2-C₂H₅-C₆H₄)₃P, (3-C₂H₅-C₆H₄)₃P, (4-C₂H₅-C₆H₄)₃P, (2-n-C₃H₇-C₆H₄)₃P, (3-n-C₃H₇C₆H₄)₃P, (4-n-C₃H₇-C₆H₄)₃P, (2-i-C₃H₇C₆H₄)₃P, (3-i-C₃H₇-C₆H₄)₃P, (4-i-C₃H₇-C₆H₄)₃P, (C₆H₅)(C₆H₁₁)₂P, (2-n-C₄H₉-C₆H₄)₃P, (C₆H₅)(s-C₄H₉)₂P, (C₆H₁₁)[C(C₂H₄)₂(N(CH₃Cl)]P, (C₆H₁₁)₂[CH₂CH₂N(CH₃)₃Cl]P, (C₆H₁₁)₂[CH₂CH₂SO₃Na]P oder (2,4-Di-t-C₄H₉-C₆H₃)₃P bedeuten.

6. Verfahren gemäss Anspruch 1, **dadurch gekennzeichnet, dass** T³ H, C₁-C₉-Alkyl, Cyclopentyl, Cyclohexyl, Phenyl oder Naphthyl darstellt, die unsubstituiert oder mit C₁-C₄-Alkyl, C₁-C₄-Alkoxy, C₁-C₄-Halogenalkyl, Phenyl, F oder Cl substituiert sind.

7. Verfahren gemäss Anspruch 1, **dadurch gekennzeichnet, dass** es sich bei den Verbindungen der Formel 1 um solche der Formel Ib handelt 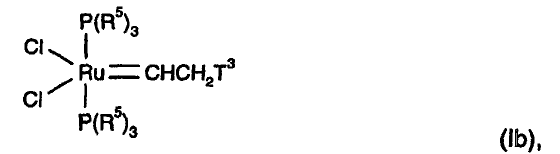 worin R⁵ für α-verzweigtes C₃-C₈-Alkyl, unsubstituiertes oder mit C₁-C₄-Alkyl, C₁-C₄-Halogenalkyl, C₁-C₄-Alkoxy, Halogen oder -NO₂ substituiertes C₅-C₈-Cycloalkyl, oder unsubstituiertes oder mit C₁-C₄-Alkyl, C₁-C₄-Halogenatkyl, C₁-C₄-Alkoxy, Halogen oder -NO₂ substituiertes C₆-C₁₀-Aryl steht, und
T³ H, C₁-C₆-Alkyl, unsubstituiertes oder mit C₁-C₄-Alkyl, C₁-C₄-Halogenalkyl, C₁-C₄-Alkoxy, Halogen oder -NO₂ substituiertes C₅-C₈-Cycloalkyl, oder unsubstituiertes oder mit C₁-C₄-Alkyl, C₁-C₄-Halogenalkyl, C₁-C₄-Alkoxy, Halogen oder -NO₂ substituiertes C₆-C₁₀-Aryl bedeutet.

8. Verfahren gemäss Anspruch 1, **dadurch gekennzeichnet, dass** es sich bei den Verbindungen der Formeln I um Cl₂[P(C₅H₉)₃]₂Ru=CH-CH₃, Cl₂[P(C₆H₁₁)₃]₂Ru=CHCH₃, Cl₂[P(C₅H₉)₃]₂Ru=CH-n-C₄H₉, Cl₂[P(C₆H₁₁)₃]₂Ru=CH-n-C₄H₉, Br₂[P(C₅H₉)₃]₂Ru=CH-CH₂C₆H₅, BrCl[P(C₆H₁₁)₃]₂Ru=CH-CH₂C₆H₅, oder BrCl[P(i-C₃H₇)₃]₂Ru=CH-CH₂C₆H₅ handelt.

## Claims

1. A process for the preparation of a compound of the formula: 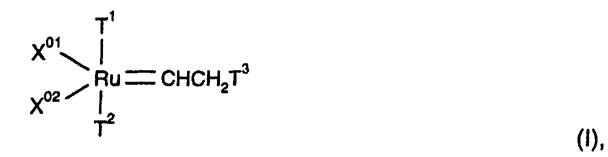 wherein
X⁰¹ and X⁰² are each independently of the other halogen;
T¹ and T² are each independently of the other a tertiary phosphine, or T¹ and T² together are a ditertiary diphosphine; and
T³ is hydrogen, C₁-C₂₀alkyl, C₃-C₈cycloalkyl, C₃-C₇heterocycloalkyl having one or two hetero atoms selected from the group oxygen, sulfur and nitrogen, C₆-C₁₄aryl, or C₄-C₁₅heteroaryl having from one to three hetero atoms selected from the group oxygen, sulfur and nitrogen,
wherein alkyl, cycloalkyl, heterocycloalkyl, aryl and heteroaryl are unsubstituted or substituted by C₁-C₄alkyl, C₁-C₄haloalkyl, C₁-C₄alkoxy, C₆-C₁₀aryl, C₆-C₁₀aryloxy, -NO₂ or by halogen; in which a metal salt of the formula: 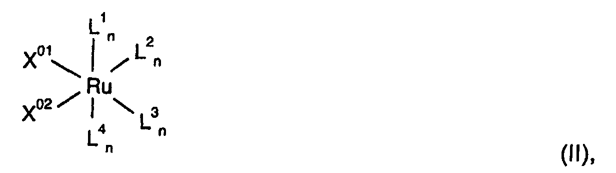 wherein
X⁰¹ and X⁰² are as defined above,
L¹, L², L³ and L⁴ are each independently of the others a neutral ligand, and
n is 0 or 1;
is first reacted in the presence of a base and a secondary or tertiary alcohol with a tertiary phosphine or a ditertiary diphosphine and then reacted in the presence of an acid with an alkyne of the formula:
HC≡C-T³ (III)
wherein T³ is as defined above.

2. A process according to claim 1, wherein X⁰¹ and X⁰² are Cl.

3. A process according to claim 1, wherein the tertiary phosphines and the ditertiary diphosphines correspond to formula IV or IVa,
PR¹R²R³ (IV),
R¹R²P-Z-PR¹R² (IVa),
wherein
R¹, R² and R³ are each independently of the others C₁-C₂₀alkyl, C₄-C₁₂cycloalkyl, C₂-C₁₁. heterocycloalkyl, C₆-C₁₆aryl, C₂-C₁₅heteroaryl or C₇-C₁₆aralkyl, wherein alkyl, cycloalkyl, heterocycloalkyl, aryl, heteroaryl and aralkyl are unsubstituted or substituted by a substituent selected from the group consisting of C₁-C₆alkyl, C₁-C₆alkoxy, C₁-C₆haloalkyl, C₆-C₁₆aryl,-NO₂, SO₃⁻, ammonium and halogen; the radicals R¹ and R² together are tetra- or penta-methylene which is unsubstituted or substituted by C₁-C₆alkyl, C₁-C₆haloalkyl, -NO₂ or by C₁-C₆alkoxy, or are tetra- or penta-methylene which is unsubstituted or substituted by C₁-C₆alkyl, C₁-C₆haloalkyl, -NO₂ or by C₁-C₆alkoxy and condensed with one or two 1,2-phenylene(s), and R³ is as defined above; and
Z is linear or branched, unsubstituted or C₁-C₄alkoxy-substituted C₂-C₁₂alkylene; unsubstituted or C₁-C₄alkyl- or C₁-C₄alkoxy-substituted 1,2- or 1,3-cycloalkylene having from 4 to 8 carbon atoms; unsubstituted or C₁-C₄alkyl- or C₁-C₄alkoxy-substituted 1,2- or 1,3-hetero-cycloalkylene having 5 or 6 ring members and one hetero atom from the group O atom and N atom, unsubstituted or C₁-C₄alkyl- or C₁-C₄alkoxy-substituted 1,2-phenylene; 1-methylenephen-2-yl; 1,2-dimethylenebenzene or unsubstituted or C₁-C₄alkyl- or C₁-C₄alkoxy-substituted 2,2'-biphenylene.

4. A process according to claim 1, wherein T¹ and T² correspond to a tertiary phosphine of formula IV wherein R¹, R² and R³ are each independently of the others C₁-C₂₀alkyl, C₄-C₁₂cycloalkyl or C₆-C₁₆aryl, wherein alkyl, cycloalkyl and aryl are unsubstituted or substituted by a substituent selected from the group consisting of C₁-C₆alkyl, C₁-C₆alkoxy, C₁-C₆hatoalkyl, C₆-C₁₆aryl, -NO₂, SO₃⁻, ammonium and halogen.

5. A process according to claim 4, wherein T¹ and T² are (C₆H₅)₂(iso-C₃H₇)P, (C₆H₅)(iso-C₃H₇)₂P, (C₆H₅)₂(C₆H₁₁)P, (C₆H₅)₃P, (C₆H₅CH₂)₃P, (C₅H₉)₃P, (2,3-di-tert-C₄H₉-C₆H₃)₃P, (2,6-di-tert-C₄H₉-C₆H₃)₃P, (3-CH₃-6-tert-C₄H₉-C₆H₃)₃P, (C₆H₁₁)₃P, (2-CH₃-6-tert-C₄H₉-C₆H₃)₃P, (4-tert-C₄H₉-C₆H₄)₃P, (3-tert-C₄H₉-C₆H₄)₃P, (2-tert-C₄H₉-C₆H₄)₃P, (4-iso-C₄H₉-C₆H₄)₃P, (CH₃)₃P, (C₂H₅)₃P, (n-C₃H₇)₃P, (iso-C₃H₇)₃P, (n-C₄H₉)₃P, (3-iso-C₄H₉-C₆H₄)₃P, (2-iso-C₄H₉-C₆H₄)₃P, (4-n-C₄H₉-C₆H₄)₃P, (3-n-C₄H₉-C₆H₄)₃P, (sec-C₄H₉)₃P, (2-CH₃-C₆H₄)₃P, (3-CH₃-C₆H₄)₃P, (4-CH₃-C₆H₄)₃P, (2,4-di-CH₃-C₆H₃)₃P, (2,6-di-CH₃-C₆H₃)₃P, (2-C₂H₅-C₆H₄)₃P, (3-C₂H₅-C₆H₄)₃P, (4-C₂H₅-C₆H₄)₃P, (2-n-C₃H₇-C₆H₄)₃P, (3-n-C₃H₇-C₆H₄)₃P, (4-n-C₃H₇C₆H₄)₃P, (2-iso-C₃H₇-C₆H₄)₃P, (3-iso-C₃H₇-C₆H₄)₃P, (4-iso-C₃H₇-C₆H₄)₃P, (C₆H₅)(C₆H₁₁)₂P, (2-n-C₄H₉-C₆H₄)₃P, (C₆H₅)(sec-C₄H₉)₂P, (C₆H₁₁)[C(C₂H₄)₂(N(CH₃)₃Cl)]P, (C₆H₁₁)₂[CH₂CH₂N(CH₃)₃Cl]P, (C₆H₁₁)₂[CH₂CH₂SO₃Na]P or (2,4-di-tert-C₄H₉-C₆H₃)₃P.

6. A process according to claim 1, wherein T³ is hydrogen, C₁-C₉alkyl, cyclopentyl, cyclohexyl, phenyl, benzyl or naphthyl, which are unsubstituted or substituted by C₁-C₄alkyl, C₁-C₄alkoxy, C₁-C₄haloalkyl, phenyl, F or by Cl.

7. A process according to claim 1, wherein the compounds of formula I are those of formula Ib 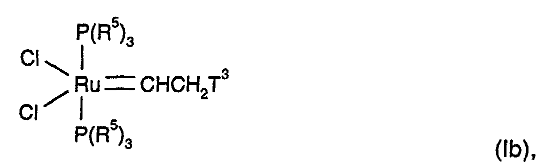 wherein
R⁵ is α-branched C₃-C₈alkyl, or C₅-C₈cycloalkyl which is unsubstituted or substituted by C₁-C₄alkyl, C₁-C₄haloalkyl, C₁-C₄alkoxy, halogen or by -NO₂, or C₆-C₁₀aryl which is unsubstituted or substituted by C₁-C₄alkyl, C₁-C₄haloalkyl, C₁-C₄alkoxy, halogen or by -NO₂, and
T³ is hydrogen, C₁-C₆alkyl, or C₅-C₈cycloalkyl which is unsubstituted or substituted by C₁-C₄alkyl, C₁-C₄haloalkyl, C₁-C₄alkoxy, halogen or by -NO₂, or C₆-C₁₀aryl which is unsubstituted or substituted by C₁-C₄alkyl, C₁-C₄haloalkyl, C₁-C₄alkoxy, halogen or by -NO₂.

8. A process according to claim 1, wherein the compounds of formula I are Cl₂[P(C₅H₉)₃]₂Ru=CH-CH₃, Cl₂[P(C₆H₁₁)₃]₂Ru=CHCH₃, Cl₂[P(C₅H₉)₃]₂Ru=CH-n-C₄H₉, Cl₂[P(C₆H₁₁)₃]₂Ru=CH-n-C₄H₉, Br₂[P(C₅H₉)₃]₂Ru=CH-CH₂C₆H₅, BrCl[P(C₆H₁₁)₃]₂Ru=CH-CH₂C₆H₅, and BrCl[P(iso-C₃H₇)₃]₂Ru=CH-CH₂C₆H₅.

## Revendications

1. Procédé pour la préparation d'un composé de formule : 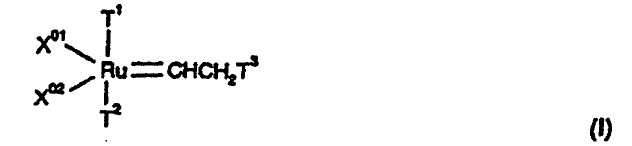 où
X⁰¹ et X⁰² représentent, indépendamment l'un de l'autre, un atome d'halogène ;
T¹ et T² représentent, indépendamment l'un de l'autre, une phosphine tertiaire ou T¹ et T² représentent, conjointement, une diphosphine ditertiaire ; et
T³ représente un atome d'hydrogène, un groupe groupes alkyle en C₁-C₂₀ ; un groupe cycloalkyle en C₃-C₈ ; hétérocycloalkyle en C₃-C₇ présentant un ou deux hétéroatomes pris dans le groupe comprenant des atomes d'oxygène, de soufre et d'azote, aryle en C₆-C₁₄, ou un groupe hétéroaryle en C₄-C₁₅ présentant 1 à 3 hétéroatomes pris dans le groupe comprenant des atomes d'oxygène, de soufre et d'azote, les groupes alkyle, cycloalkyle, hétérocycloalkyle, aryle et hétéroaryle étant non substitués ou substitués par des substituants alkyle en C₁-C₄, haloalkyle en C₁-C₄, alkoxy en C₁-C₄, aryle en C₆-C₁₀, aryloxy en C₆-C₁₀, -NO₂ ou halogène ;
en faisant réagir d'abord un sel métallique de formule 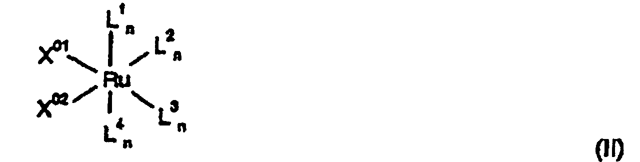 où
X⁰¹ et X⁰² possèdent les significations données ci-dessus,
L¹, L², L³ et L⁴ représentent, indépendamment l'un de l'autre, un ligand neutre et
n vaut 0 ou 1 ;
en présence d'une base et d'un alcool secondaire ou tertiaire sur une phosphine tertiaire ou une diphosphine ditertiaire et ensuite en présence d'un acide sur une alcyne de formule :
HC≡C-T³ (III)
où T³ possède la signification donnée ci-dessus.

2. Procédé selon la revendication 1, **caractérisé en ce que** X⁰¹ et X⁰² représentent Cl.

3. Procédé selon la revendication 1, **caractérisé en ce que** les phosphines tertiaires et les diphosphines ditertiares répondent aux formules IV ou IVa
PR¹R²R³ (IV),
R¹R²P-Z-PR¹R² (IVa)
où
R¹, R² et R³ représentent, indépendamment les uns des autres, des groupes alkyle en C₁-C₂₀, cycloalkyle en C₄-C₁₂, hétérocycloalkyle en C₂-C₁₁, aryle en C₆-C₁₆, hétéroaryle en C₂-C₁₅ ou aralkyle en C₇-C₁₆, où les groupes alkyle, cycloalkyle, hétérocycloalkyle, aryle, hétéroaryle et aralkyle sont non substitués ou substitués par un substituant pris dans le groupe comprenant des groupes alkyle en C₁-C₆, alkoxy en C₁-C₆, haloalkyle en C₁-C₆, aryle en C₆-C₁₆, -NO₂, SO₃⁻, ammonium ou halogène ; les restes R¹ et R² représentent ensemble un groupe tétra- ou pentaméthylène non substitué ou substitué par des substituants alkyle en C₁-C₆, haloalkyle en C₁-C₆, -NO₂ ou alkoxy en C₁-C₆, ou un groupe tétra- ou pentaméthylène non substitué ou substitué par des substituants alkyle en C₁-C₆, haloalkyle en C₁-C₆, -NO₂ ou alkoxy en C₁-C₆ et condensé sur 1 ou 2 groupes 1,2-phénylène, et R³ possède la signification donnée auparavant ; et
Z représente un groupe alkylène en C₂-C₁₂ à chaîne droite ou ramifiée, non substitué ou substitué par un substituant alkoxy en C₁-C₄ ; un groupe 1,2- ou 1,3-cycloalkylène présentant 4 à 8 atomes de carbone non substitué ou substitué par des substituants alkyle en C₁-C₄ ou alkoxy en C₁-C₄ ; un groupe 1,2- ou 1,3-hétérocycloalkylène à 5 ou 6 chaînons et avec un hétéroatome pris parmi les atomes O et N, non substitué ou substitué par des substituants alkyle en C₁-C₄ ou alkoxy en C₁-C₄ ; un groupe 1,2-phénylène non substitué ou substitué par des substituants alkyle en C₁-C₄ ou alkoxy en C₁-C₄ ; 1-méthylènephén-2-yle ; des groupes 1,2-diméthylbenzène ou 2,2'-biphénylène non substitué ou substitué par des substituants alkyle en C₁-C₄ ou alkoxy en C₁-C₄.

4. Procédé selon la revendication 1, **caractérisé en ce que** T¹ et T² représentent une phosphine tertiaire de formule IV, où R¹, R² et R³ représentent, indépendamment les uns des autres, des groupes alkyle en C₁-C₂₀, cycloalkyle en C₄-C₁₂ ou aryle en C₆-C₁₆, où les groupes alkyle, cycloalkyle et aryle sont non substitués ou substitués par un substituant pris dans le groupe comprenant alkyle en C₁-C₆, alkoxy en C₁-C₆, haloalkyle en C₁-C₆, aryle en C₆-C₁₆, -NO₂, SO₃⁻, ammonium ou halogène.

5. Procédé selon la revendication 4, **caractérisé en ce que** T¹ et T² représentent (C₆H₅)₂(i-C₃H₇)P, (C₆H₅)(ᵢ-C₃H₇)₂P, (C₆H₅)₂(C₆H₁₁)P, (C₆H₅)₃P. (C₆H₅CH₂)₃P, (C₅H₉)₃P, (2,3-di-t-C₄H₉-C₆H₃)₃P, (2,6-di-t-C₄H₉-C₆H₃)₃P, (3-CH₃-6-t-C₄H₉-C₆H₃)₃P, (C₆H₁₁)₃P, (2-CH₃-6-t-C₄H₉-C₆H₃)₃P, (4-t-C₄H₉-C₆H₄)₃P, (3-t-C₄H₉-C₆H₄)₃P, (2-t-C₄H₉-C₆H₄)₃P, (4-i-C₄H₉-C₆H₄)₃P, (CH₃)₃P, (C₂H₅)₃P, (n-C₃H₇)₃P, (ᵢ-C₃H₇)₃P, (n-C₄H₉)₃P, (3-i-C₄H₉-C₆H₄)₃P, (2-i-C₄H₉-C₆H₄)₃P, (4-n-C₄H₉-C₆H₄)₃P, (3-n-C₄H₉-C₆H₄)₃P, (s-C₄H₉)₃P, (2-CH₃-C₆H₄)₃P, (3-CH₃-C₆H₄)₃P, (4-CH₃-C₆H₄)₃P, (2,4-dᵢ-CH₃-C₆H₃)₃P, (2,6-di-CH₃-C₆H₃)₃P, (2-C₂H₅-C₆H₄)₃P, (3-C₂H₅-C₆H₄)₃P, (4-C₂H₅-C₆H₄)₃P, (2-n-C₃H₇C₆H₄)₃P, (3-n-C₃H₇-C₆H₄)₃P, (4-n-C₃H₇-C₆H₄)₃P, (2-i-C₃H₇-C₆H₄)₃P, (3-i-C₃H₇-C₆H₄)₃P, (4-i-C₃H₇-C₆H₄)₃P, (C₆H₅)(C₆H₁₁)₂P, (2-n-C₄H₉-C₆H₄)₃P, (C₆H₅)(s-C₄H₉)₂P, (C₆H₁₁)[C(C₂H₄)₂(N(CH₃)₃Cl)]P, (C₆H₁₁)₂[CH₂CH₂N(CH₃)₃Cl]P, (C₆H₁₁)₂[CH₂CH₂SO₃Na]P ou (2,4-di-t-C₄H₉-C₆H₃)₃P.

6. Procédé selon la revendication 1, **caractérisé en ce que** T³ représente un atome d'hydrogène, des groupes alkyle en C₁-C₉, cyclopentyle, cyclohexyle, phényle ou naphtyle, qui sont non substitués ou substitués par des substituants alkyle en C₁-C₄, alkoxy en C₁-C₄, haloalkyle en C₁-C₄, phényle, F ou Cl.

7. Procédé selon la revendication 1, **caractérisé en ce qu'**il s'agit, pour les composés de formule I, de tels qui répondent à la formule Ib 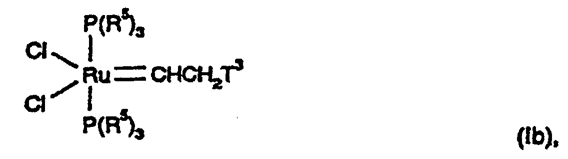 où
R⁵ représente un groupe alkyle en C₃-C₈ ramifié en α, cycloalkyle en C₅-C₈ non substitué ou substitué par des substituants alkyle en C₁-C₄, haloalkyle en C₁-C₄, alkoxy en C₁-C₄, halogène ou -NO₂, ou aryle en C₆-C₁₀ non substitué ou substitué par un substituant alkyle en C₁-C₄, haloalkyle en C₁-C₄, alkoxy en C₁-C₄, halogène ou -NO₂, et
T³ représente un atome d'hydrogène, des groupes alkyle en C₁-C₆, cycloalkyle en C₅-C₈ non substitué ou substitué par un substituant alkyle en C₁-C₄, haloalkyle en C₁-C₄, alkoxy en C₁-C₄, halogène ou -NO₂, ou aryle en C₆-C₁₀ non substitué ou substitué par un substituant alkyle en C₁-C₄, haloalkyle en C₁-C₄, alkoxy en C₁-C₄, halogène ou -NO₂.

8. Procédé selon la revendication 1, **caractérisé en ce que**, pour les composés de formule I, il s'agit de
Cl₂[P(C₅H₉)₃]₂Ru=CH-CH₃, Cl₂[P(C₆H₁₁)₃]₂Ru=CHCH₃, Cl₂[P(C₅H₉)₃]₂Ru=CH-n-C₄H₉, Cl₂[P(C₆H₁₁)₃]₂Ru=CH-n-C₄H₉, Br₂[P(C₅H₉)₃]₂Ru=CH-CH₂C₆H₅, BrCl[P(C₆H₁₁)₃]₂Ru=CH-CH₂C₆H₅, ou BrCl[P[i-C₃-H₇)₃]₂Ru=CH-CH₂C₆H₅.
